# FASCICULE DE BREVET EUROPEEN

(11) **EP 1 193 137 B1**
(45) Date de publication et mention de la délivrance du brevet: **17.10.2007**
(21) Numéro de dépôt: 01402254.5
(22) Date de dépôt: 29.08.2001
(51) Int. Cl.: B60R 21/13

(54) **Véhicule automobile équipé de barres de protection d'habitacle extractibles**
Kraftfahrzeug mit herausziehbaren Kraftfahrzeug- Zellenschutzstangen
Motor vehicle provided with extensible rods for passenger compartment protection

(30) Priorité: 27.09.2000 FR 0012313
(43) Date de publication de la demande: 03.04.2002
(73) Titulaire: Peugeot Citroen Automobiles SA, 92200 Neuilly sur Seine (FR)
(72) Inventeur: Arnaud, Mathieu, 80260 Vaux en Amienois (FR); Quentin, Frédéric, 75013 Paris (FR)
(74) Mandataire: Habasque, Etienne J. Jean-François

(56) Documents cités:
- EP-A- 0 734 910
- EP-A- 0 738 629
- DE-A- 19 533 322
- DE-U- 8 406 461

## Description

L'invention concerne un véhicule automobile, notamment de type cabriolet ou sportif.

Plusieurs véhicules de ce type sont équipés d'arceaux de sécurité extractibles, qui se déploient en dehors de l'encombrement initial du véhicule en cas de retournement, de façon à protéger les occupants de l'écrasement de la carrosserie en préservant leur espace de survie.

L'invention vise donc plus particulièrement un véhicule automobile comprenant un châssis sur lequel sont fixés rigidement des éléments de structure, dont une carrosserie présentant une paire de montants latéraux creux formant support pour un pare-brise, le véhicule comprenant en outre un dispositif de sécurité destiné à préserver la carrosserie d'un effet d'écrasement lors d'un retournement accidentel du véhicule, ledit dispositif de sécurité comportant deux barres de renfort, chacune desdites barres étant déplaçable d'une position escamotée dans laquelle elle est escamotée au moins partiellement dans un montant latéral respectif, à une position de protection dans laquelle elle fait saillie au moins partiellement dudit montant.

Les dispositifs de sécurité connus à barres de renfort extractibles mettent en oeuvre des moyens complexes pour réaliser le déplacement des barres ou arceaux de leur position escamotée dans la carrosserie du véhicule, à leur position de protection. Ces moyens comprennent en général des vérins ou des treuils à action rapide, notamment de type pyrotechnique, fournissant l'énergie nécessaire au déploiement des barres ou arceaux mobiles, en réponse à un signal de déclenchement émis par des capteurs de retournement agencés dans le véhicule.

Les problèmes de ces dispositifs sont notamment liés à l'importante quantité d'énergie qu'ils doivent développer en un temps très court et à l'implantation des actionneurs dans le véhicule, qui doit permettre de les dissimuler. De surcroît, les véhicules de type sportif présentent généralement des montants de baie de pare-brise très inclinés, ce qui rend difficile l'application d'un effort d'extraction sur les barres de renfort, notamment par un treuil placé à l'avant du véhicule, comme cela est connu dans l'état de la technique, voire par example le DE-A-195 33322.

Un but principal de l'invention est de réaliser un dispositif de sécurité du type précité, qui n'utilise pas de vérin ou de treuil comme source du mouvement des barres de renfort, afin de limiter au maximum les risques de dysfonctionnement du dispositif et le surcoût engendré.

A cet effet, un véhicule automobile suivant l'invention est caractérisé en ce que la barre est fixée rigidement à un premier élément de structure, ladite barre étant, dans sa position escamotée, déformée élastiquement et maintenue en position à l'encontre de l'effort de rappel élastique ainsi créé par au moins un organe de blocage à libération rapide, et dans sa position de protection, libre de contrainte de rappel élastique.

Ainsi, l'énergie nécessaire à la mise en mouvement des barres de renfort ou arceaux de protection est emmagasinée dans ces éléments de renfort eux-mêmes, par une déformation élastique de ces éléments lors de l'assemblage du véhicule, lesquels sont maintenus en pré-contrainte pendant l'utilisation normale du véhicule. Lors d'un retournement accidentel du véhicule, seule l'énergie nécessaire à la libération de l'énergie de déformation élastique doit être fournie au système mécanique correspondant au dispositif de sécurité, ce qui peut être réalisé par des moyens simples et de faible coût.

Suivant d'autres caractéristiques de l'invention :
- la barre est fixée par une partie de première extrémité au premier élément de structure, tandis que l'organe de blocage relie une partie de deuxième extrémité à un deuxième élément de structure, lorsque la barre est dans sa position escamotée ;
- la partie de deuxième extrémité de la barre se situe, dans la position escamotée de la barre, dans une partie supérieure du montant respectif ;
- la barre est sensiblement rectiligne et déformée en flexion dans sa position escamotée.

Suivant un autre mode de réalisation de l'invention :
- la barre comporte deux branches sensiblement orthogonales, dont une première s'étend suivant un axe sensiblement transversal du véhicule, et la deuxième est, dans la position escamotée de la barre, au moins partiellement escamotée dans le montant respectif, la partie de première extrémité appartenant à la première branche et la partie de deuxième extrémité appartenant à la deuxième branche, et la deuxième branche est déformée en torsion dans la position escamotée de la barre.

Suivant encore d'autres caractéristiques :
- l'organe de blocage s'étend, dans la position escamotée de la barre, sensiblement depuis la partie supérieure du montant jusqu'à une partie inférieure de flanc du véhicule ;
- le premier élément de structure se situe dans une partie inférieure de flanc du véhicule, et le deuxième élément de structure est soit confondu avec le premier élément de structure, soit constitué de la partie de première extrémité de la barre ;
- l'organe de blocage est un câble tendu, dans la position escamotée de la barre, entre la partie de deuxième extrémité de la barre et le deuxième élément de structure.

En variante :
- l'organe de blocage est une barre rigide ;
- le véhicule comporte un toit fixe et l'organe de blocage s'étend dans ledit toit ;
- l'organe de blocage à libération rapide comporte un élément pyrotechnique relié à un organe de commande qui commande son déclenchement ;
- l'élément pyrotechnique est adapté pour provoquer, lors de son déclenchement, la rupture de l'organe de blocage ; et, en variante :
   - l'organe de blocage présente une attache en engagement mutuel avec un moyen de rétention du deuxième élément de structure, formant la liaison entre l'organe de blocage du deuxième élément de structure, et l'élément pyrotechnique est adapté pour provoquer, lors de son déclenchement, le dégagement de l'attache par rapport au moyen de rétention.

L'invention sera mieux comprise à la lecture de la description qui va suivre, donnée uniquement à titre d'exemple et faite en se référant aux dessins annexés, sur lesquels :
- la Figure 1 est une vue schématique en coupe dans un plan longitudinal d'une partie avant d'un véhicule suivant un premier mode de réalisation de l'invention ;
- la Figure 2 est une vue en coupe à plus grande échelle, suivant la ligne 2-2 d'un montant et d'une barre de renfort représentés à la Figure 1 ;
- la Figure 3 est une vue à plus grande échelle de la barre de renfort représentée à la Figure 1 et de l'organe de blocage associé ;
- la Figure 4 est une vue analogue à la Figure 1 suivant un deuxième mode de réalisation de l'invention ;
- la Figure 5 est une vue analogue suivant un troisième mode de réalisation de l'invention ;
- la Figure 6 est une vue analogue suivant un quatrième mode de réalisation de l'invention ;
- la Figure 7 est une vue de face, suivant la direction F indiquée sur la Figure 6, des barres de renfort et de l'élément de structure sur lequel elles sont fixées, seuls ;
- la Figure 8 une vue analogue à la Figure 6 suivant un cinquième mode de réalisation de l'invention ; et
- la Figure 9 est une vue en perspective d'un véhicule suivant un sixième mode de réalisation de l'invention.

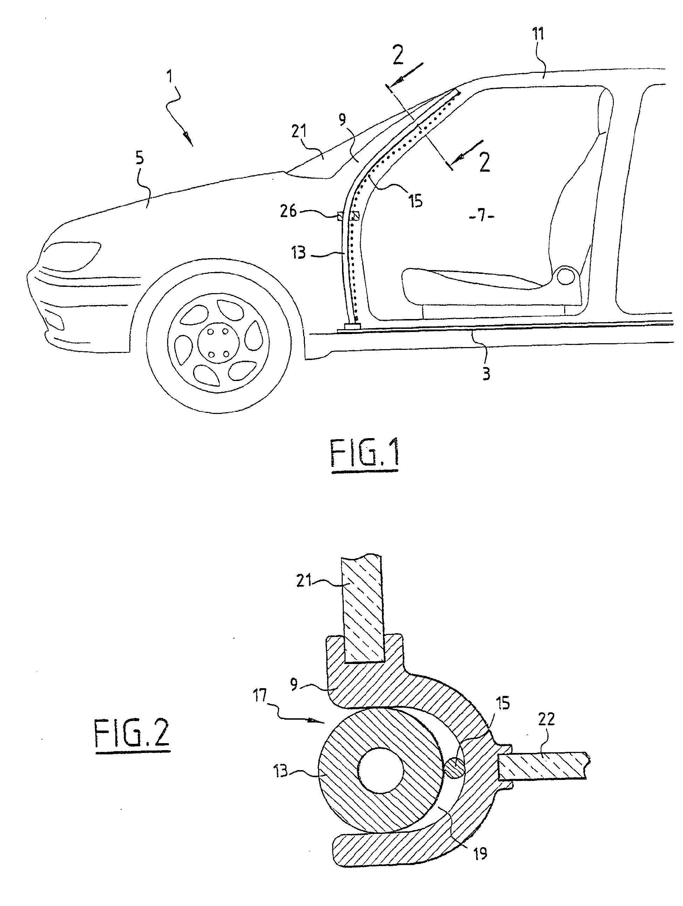

On a représenté à la Figure 1, une partie avant de véhicule automobile. Ce véhicule 1 comporte un châssis 3 auquel est fixée rigidement une carrosserie 5 définissant un habitacle 7. Deux montants latéraux 9 symétriques par rapport au plan longitudinal de symétrie du véhicule, venus de matière de la carrosserie 5 ou réalisés indépendamment et solidarisés à celle-ci, supportent une baie de pare-brise.

On notera que sur un véhicule de style sportif, tel qu'il a été représenté à la Figure 1, les montants latéraux 9 sont très inclinés vers l'arrière par rapport à la verticale.

Sur la même Figure, on a représenté un toit 11 fixe, supporté notamment par l'extrémité supérieure des montants latéraux 9, étant entendu que le premier mode de réalisation de l'invention qui fait l'objet de la Figure 1 pourrait s'adapter un véhicule du type décapotable ou cabriolet.

Les montants latéraux 9, comme cela sera mieux vu sur la Figure suivante, sont creux, de sorte qu'ils peuvent recevoir la partie supérieure d'une barre de renfort 13 respective.

La barre de renfort 13, qui est réalisée dans un matériau à résistance mécanique élevée et doté de bonnes caractéristiques élastiques, tel que de l'acier, s'étend sensiblement du châssis 3 jusqu'au toit 11. La barre 13 est fixée rigidement, par son extrémité inférieure, à une partie latérale du châssis 3, constituant un premier élément de structure, située sensiblement au droit de l'emplanture du montant latéral respectif 9. La fixation étant réalisée par exemple par soudure ou par boulonnage. La barre de renfort 13 s'étend, dans sa partie inférieure, à l'intérieur d'une partie de flanc de la carrosserie 5 dans une direction sensiblement verticale.

A la Figure 1, on a représenté la barre 13 dans sa position correspondant à une utilisation normale du véhicule, c'est-à-dire dans laquelle elle est complètement escamotée dans la carrosserie 5, la partie supérieure de la barre 13 étant intégrée dans le montant latéral respectif 9. Dans cette position, la barre 13 est précontrainte en flexion, c'est-à-dire qu'elle est déformée élastiquement par rapport à sa position nominale de repos dans laquelle la partie supérieure de la barre 13 est moins inclinée par rapport à la verticale. La barre 13 est maintenue dans cette position fléchie, en l'absence de retournement accidentel du véhicule, au moyen d'un organe de blocage 15 représenté sur cette figure en traits pointillés.

En référence maintenant à la Figure 2, qui est une section dans un plan orthogonal d'un montant latéral 9 du montant et de la barre de renfort 13, on constate que le montant 9 présente une section de forme générale en demi-anneau présentant une ouverture 17 pratiquée sur toute la longueur du montant 9 dans le plan de flexion de la barre 13, et donnant accès à une gouttière 19 constituant la partie creuse du montant 9 destinée à recevoir la barre 13. Dans la position escamotée de la barre de renfort 13, celle-ci est reçue de façon complémentaire dans la gouttière 19 moyennant une légère déformation élastique des branches du demi-anneau défini suivant une section du montant latéral 9.

On a représenté sur cette même Figure 2, la disposition de la baie de pare-brise 21 et d'une vitre latérale 22 par rapport au montant latéral 9, la baie de pare-brise 21 et la vitre latérale 22 étant reçues dans des glissières respectives formées dans la surface périphérique du montant 9.

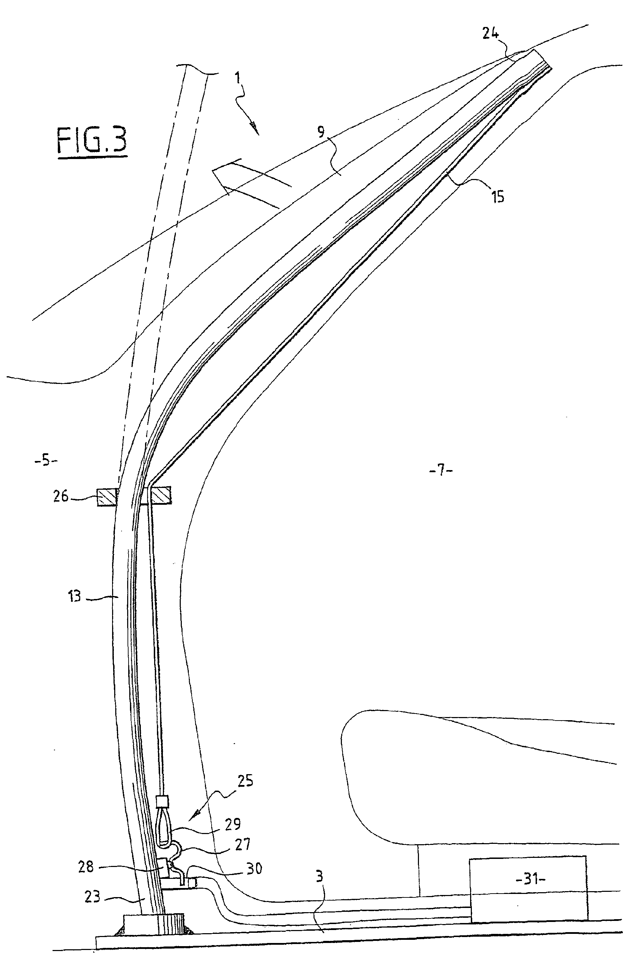

Sur la Figure 3, on voit que l'organe de blocage 15 est constitué d'un câble qui est, dans la position escamotée de la barre 13 (représentée en traits pleins) tendu entre une région d'extrémité inférieure d'emplanture 23 et l'extrémité supérieure libre 25 de la barre 13. Le câble 15 est solidarisé, par exemple par soudure, à l'extrémité libre 24, tandis que l'autre extrémité du câble est reliée à la région d'extrémité inférieure 23 de la barre 13, constituant un deuxième élément de structure. Cette dernière extrémité de câble est associée à un mécanisme de libération rapide 25, faisant de l'organe de blocage 15 un organe de blocage dit « à libération rapide ».

Pour limiter la déformation de la barre 13 dans sa région inférieure, il est prévu un guide 26 fixé à la structure, sous la forme d'un demi-anneau dans lequel est reçue la barre 13, mais également le câble 15. Ainsi, celui-ci est guidé le long de la barre 13, de sorte que l'ensemble présente un encombrement limité.

Le mécanisme de libération rapide 25 comporte un crochet 27, formant moyen de rétention, monté pivotant sur un plot 28 solidaire de l'extrémité inférieure 23 de la barre 13, mais qui pourrait être solidaire de tout élément de structure fixe par rapport au châssis 3. Le crochet 27 s'insère dans une boucle 29 d'extrémité du câble 15, formant attache, lorsque celui-ci est tendu, de façon à maintenir la barre 13 en position fléchie à l'encontre de l'effort de rappel élastique de flexion. Le crochet est lié mécaniquement à un élément pyrotechnique 30 sous la forme d'un compartiment dans lequel est placée une charge explosive, dont le déclenchement est commandé par un organe électronique de commande 31. Le déclenchement de la charge provoque un actionnement brusque du crochet 27 et un pivotement de celui-ci, de façon à le dégager de la boucle d'extrémité 29 du câble 15, et ainsi libérer la barre 13 de sa contrainte de flexion.

L'organe électronique de commande 31 déclenche l'élément pyrotechnique 30 en réponse à des signaux émis par un ou plusieurs capteurs de retournement du véhicule, ces capteurs étant connus dans l'état de la technique.

Le déclenchement de l'élément pyrotechnique 30 provoque par conséquent le passage de la barre 13 de sa position en contrainte de flexion et escamotée dans le montant 9, à sa position extraite du montant 9 (telle que représentée sur cette Figure en traits mixtes) et libre de contrainte de rappel élastique. L'extraction de la barre 13 se fait au travers de l'ouverture 17 (référencée sur la Figure 2) avec une légère déformation élastique des branches du montant 9.

Il va de soi que l'extraction des deux barres 13 correspondant aux deux montants latéraux 9 est réalisée de façon simultanée en cas de retournement du véhicule, chacune des barres 13 disposant d'un élément pyrotechnique actionné de façon centralisée par le dispositif électronique de commande 31.

Dans la description qui vient d'être faite, on s'est limité à décrire des barres de renfort 13 présentant une extrémité libre 24, mais on peut parfaitement envisager que les deux barres 13 soient reliées, au niveau des extrémités supérieures 24 par une barre transversale de façon à constituer un arceau, la barre transversale étant reçue par exemple dans le bord correspondant du toit 11, et extraite de celui-ci de façon analogue à ce qui vient d'être décrit pour les barres 13 et les montants latéraux 9.

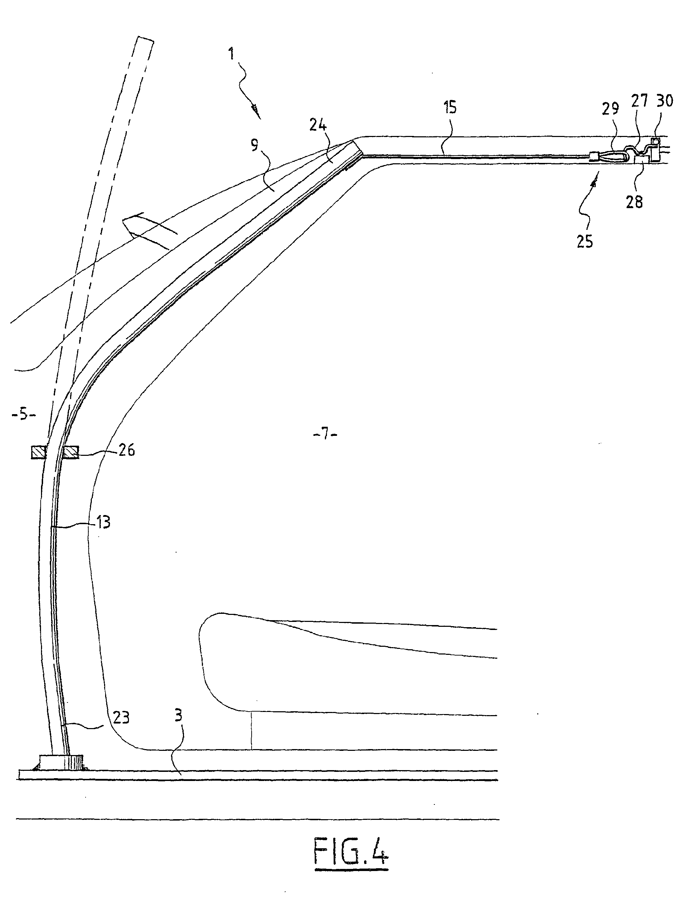

A la Figure 4, on a représenté un deuxième mode de réalisation de l'invention qui ne diffère de celui décrit en référence aux Figures 1 à 3 qu'en ce que l'organe de blocage 15 s'étend dans le toit 11 du véhicule, le mécanisme de libération 25 étant disposé non dans une région d'extrémité inférieure 23 de la barre 13, mais dans le toit 11. Ce mode de réalisation ne sera donc pas décrit plus en détail.

Il va de soi que ce mode de réalisation s'applique à un véhicule comportant un toit fixe.

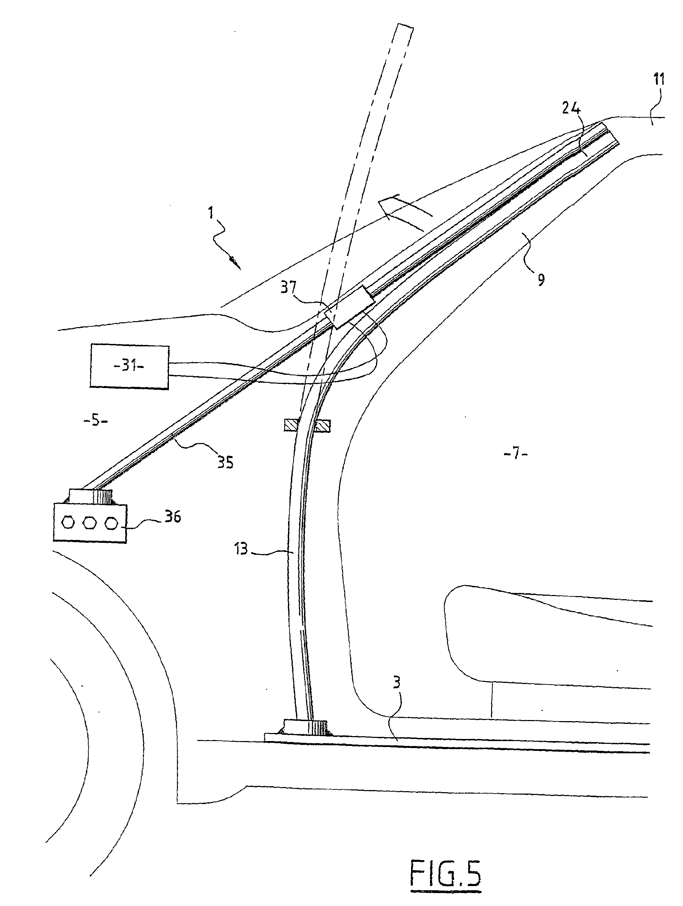

A la Figure 5, on a représenté schématiquement l'avant d'un véhicule automobile 1 équipé d'un dispositif de sécurité correspondant à un troisième mode de réalisation de l'invention, dans lequel les barres 13 sont conformées et disposées de façon analogue à ce qui a été décrit dans les deux modes de réalisation précédents. Suivant ce troisième mode de réalisation, l'organe de blocage 35 est une barre rigide fixée à une de ses extrémités à un élément de structure 36 solidaire du châssis 3 par l'intermédiaire d'éléments non représentés, et à son autre extrémité à une région d'extrémité libre 24 de la barre de renfort 13. Ainsi, en position escamotée de la barre de renfort 13, celle-ci est précontrainte en flexion sous l'effet de l'effort de compression exercé par la barre rigide 35 (contrairement aux deux modes de réalisation précédents où l'organe de blocage 15 exerce un effort de traction sur l'extrémité libre 24 de la barre 13). Dans une région intermédiaire de la barre rigide 35 est disposé un élément pyrotechnique 37 comportant une charge explosive dont le déclenchement est commandable par un organe électronique de commande 31 analogue à ce qui a été décrit précédemment, la charge explosive étant adaptée pour provoquer, lors de son déclenchement, la rupture de la barre rigide 35. On comprend que le déclenchement de la charge explosive en cas de retournement accidentel du véhicule provoque la libération de la barre de renfort 13, à savoir son extraction du montant latéral 9 correspondant, et son retour à une position libre de contrainte élastique telle qu'elle a été représentée en traits mixtes.

De même que la barre de renfort 13, la barre rigide 35 est prévue pour être dissimulée à l'intérieur de la carrosserie en condition de fonctionnement normal du véhicule.

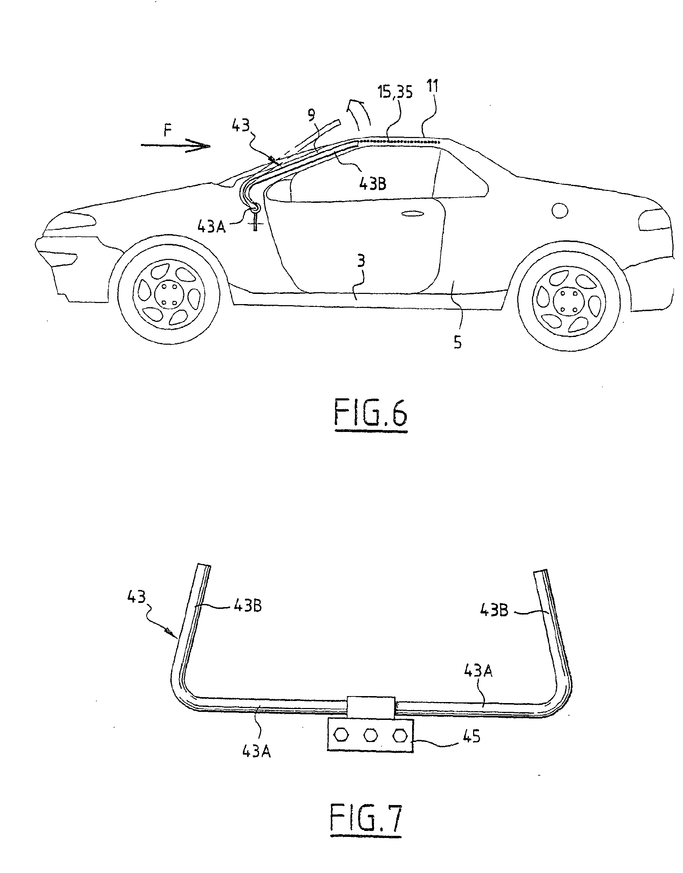

En référence maintenant aux Figures 6 et 7, on va décrire un quatrième mode de réalisation de l'invention dans lequel les barres de renfort, désignées à présent sous la référence 43, sont composées de deux branches sensiblement orthogonales 43A, 43B. La première 43A des branches s'étend sensiblement transversalement par rapport au véhicule et la deuxième branché 43B constitue la partie d'appui au sol en cas de retournement du véhicule, c'est-à-dire qu'elle constitue une partie escamotée dans le montant 9 lorsque la barre est dans sa position escamotée. La première branche 43A constitue une barre de torsion pré-contrainte dans la position escamotée de la barre 43. La barre 43, pour passer de sa position escamotée dans le montant 9 respectif à sa position extraite, subit une rotation autour de l'axe matérialisé par la barre de torsion 43A. Pour cela, une partie de la première branche 43A est rigidement fixée à un élément de structure 45, par soudage, boulonnage, ou tout autre type d'assemblage rigide adapté, ledit élément de structure 45 étant fixe par rapport au châssis 3 et à la carrosserie 5. De préférence, et comme cela a été représenté, les deux barres de torsion 43A des deux barres de renfort 43 sont en réalité formées d'une barre transversale unique fixée à l'élément de structure 45 dans une région transversale médiane.

Suivant ce quatrième mode réalisation, le véhicule comporte un toit 11 fixe dans lequel est agencé l'organe de blocage 15, 35 du type câble 15 ou barre rigide 35 tel que décrit dans les modes de réalisation précédents, et actionné de façon analogue qui ne sera donc pas détaillée davantage.

On comprend aisément que, contrairement aux modes de réalisation précédents, dans lesquels l'extraction de la barre de renfort 13 était réalisée par un effort de rappel élastique en flexion, la barre 43 est ici extraite des montants 9 en cas d'urgence par un couple de rappel de torsion généré par une déformation en torsion de la barre de torsion 43A.

Dans le mode de réalisation présent, illustré à la Figure 6, la barre de torsion 43 est constituée d'une barre transversale utilisée par ailleurs pour la fixation de la planche de bord du véhicule.

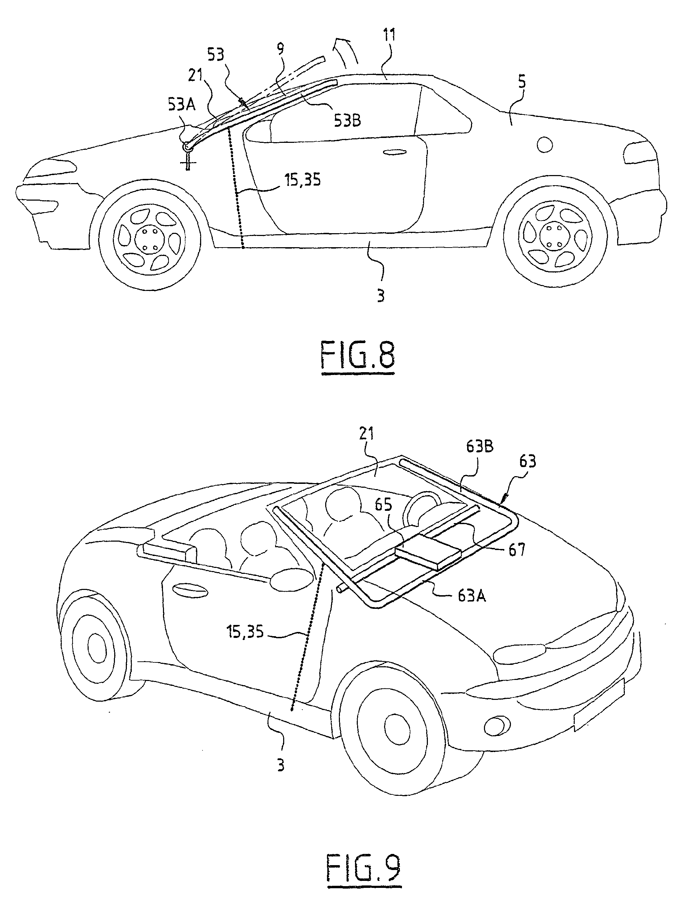

Comme illustré à la Figure 8, un cinquième mode de réalisation de l'invention consiste à prévoir une barre de torsion 53 constituée comme dans le cas précédent, d'une première branche 53A transversale et d'une deuxième branche 53B intégrée au montant 9 respectif et extractible de celui-ci. La barre de torsion 53A est ici constituée de la traverse de pied de pare-brise, et la branche transversale 53A de la barre 53 fait office de barre de torsion en même temps qu'elle remplit la fonction de support de la baie de pare-brise 21.

Le fonctionnement du dispositif de sécurité ainsi réalisé est identique à ce qui a été décrit en référence aux Figures 6 et 7, à ceci près que l'organe de blocage 15, 35 s'étend sensiblement verticalement dans une partie de flanc de la carrosserie 5 en étant fixé d'une part à une partie latérale du châssis 3, et d'autre part à une partie intermédiaire de la deuxième branche 53B de la barre de renfort 53.

Il est bien évident que l'on pourrait prévoir l'organe de blocage 15, 35 dans le toit 11 comme dans le cas précédent.

Sur la Figure 9, on a représenté un sixième mode de réalisation de l'invention appliqué à titre d'exemple à un véhicule de type cabriolet. Ce mode de réalisation est analogue aux deux précédents en ce que la barre de renfort 63 comporte deux branches, dont la première 63A constitue une barre de torsion, et la deuxième 63B est intégrée au montant 9. Il s'en distingue en ce que la barre de torsion 63A est affectée à la seule fonction de barre de torsion pour le dispositif de sécurité visé par l'invention, cette barre supplémentaire 63A étant liée à encastrement 65 à une barre transversale 6 grâce à un élément de structure rigide. La barre 67 peut être constituée soit de la traverse de planche de bord, sur laquelle est fixée la planche de bord du véhicule, qui est utilisée comme barre de torsion dans le quatrième mode de réalisation représenté à la Figure 6, soit de la traverse de pied de pare-brise qui supporte la baie de pare-brise 21 et qui est utilisée comme barre de torsion dans le cinquième mode de réalisation représenté à la Figure 8.

Comme on l'a vu à la lumière de la description qui précède, l'invention permet de réaliser un dispositif de sécurité qui préserve l'espace de survie des occupants d'un véhicule en cas de retournement de celui-ci, sans mettre en oeuvre de moyens complexes d'extraction d'arceaux tels qu'ils sont prévus dans les dispositifs connus. Dans un dispositif suivant l'invention, on apporte une énergie relativement faible nécessaire à la rupture d'un équilibre mécanique, soit par un mouvement de dégagement, soit par une rupture de pièce, l'essentiel de l'énergie mécanique nécessaire au fonctionnement du dispositif étant emmagasiné au moment de l'assemblage du véhicule.

Le rôle du système de déclenchement dans le fonctionnement d'un tel dispositif est donc ramené essentiellement à une fonction de libération d'énergie, et non à une fonction d'apport d'une énergie d'extraction de barres de renfort, ce qui procure une simplification importante et une fiabilité accrue.

## Revendications

1. Véhicule automobile comprenant un châssis (3) sur lequel sont fixés rigidement des éléments de structure, dont une carrosserie (5) présentant une paire de montants latéraux creux (9) formant support pour un pare-brise (21), le véhicule comprenant en outre un dispositif de sécurité destiné à préserver la carrosserie (5) d'un effet d'écrasement lors d'un retournement accidentel du véhicule, ledit dispositif de sécurité comportant deux barres de renfort (13 ; 43 ; 53 ; 63), chacune desdites barres étant déplaçable d'une position escamotée dans laquelle elle est escamotée au moins partiellement dans un montant latéral respectif (9), à une position de protection dans laquelle elle fait saillie au moins partiellement dudit montant (9), **caractérisé en ce que** la barre (13 ; 43 ; 53 ; 63) est fixée rigidement à un premier élément de structure (3 ;45 ;63 , 65), ladite barre étant, dans sa position escamotée, déformée élastiquement et maintenue en position à l'encontre de l'effort de rappel élastique ainsi créé par au moins un organe de blocage (15 ;35) à libération rapide, et dans sa position de protection, libre de contrainte de rappel élastique.

2. Véhicule automobile suivant la revendication 1, **caractérisé en ce que** la barre (13 ; 43 ; 53 ; 63) est fixée par une partie de première extrémité (23 ; 43A ; 53A ; 63A) au premier élément de structure (3 ; 45 ; 63, 65) , tandis que l'organe de blocage (15 ; 35) relie une partie de deuxième extrémité (24 ; 43B ; 53B ; 63B) à un deuxième élément de structure (3 ; 23 ; 36), lorsque la barre (13 ; 43 ; 53 ; 63) est dans sa position escamotée.

3. Véhicule automobile suivant la revendication 2, **caractérisé en ce que** la partie de deuxième extrémité (24 ; 43B ; 53B ; 63B) de la barre (13 ; 43 ; 53 ; 63) se situe, dans la position escamotée de la barre, dans une partie supérieure du montant respectif (9).

4. Véhicule automobile suivant la revendication 2 ou 3, **caractérisé en ce que** la barre (13) est sensiblement rectiligne et déformée en flexion dans sa position escamotée.

5. Véhicule automobile suivant la revendication 2 ou 3, **caractérisé en ce que** la barre ( 43 ; 53 ; 63) comporte deux branches (43A, 43B ; 53A, 53B ; 63A, 63B) sensiblement orthogonales, dont une première (43A ; 53A ; 63A) s'étend suivant un axe sensiblement transversal du véhicule, et la deuxième est, dans la position escamotée de la barre, au moins partiellement escamotée dans le montant respectif (9), la partie de première extrémité appartenant à la première branche (43A ; 53A ; 63A) et la partie de deuxième extrémité appartenant à la deuxième branche (43B ; 53B ; 63B), et la deuxième branche (43B ; 53B ; 63B) est déformée en torsion dans la position escamotée de la barre.

6. Véhicule automobile suivant la revendication 4 ou 5, **caractérisé en ce que** l'organe de blocage (15; 35) s'étend, dans la position escamotée de la barre (13), sensiblement depuis la partie supérieure du montant (9) jusqu'à une partie inférieure de flanc du véhicule.

7. Véhicule automobile suivant les revendications 4 et 6 prises ensemble, **caractérisé en ce que** le premier élément de structure (3) se situe dans une partie inférieure de flanc du véhicule, et le deuxième élément de structure (3, 23) est soit confondu avec le premier élément de structure (3), soit constitué de la partie de première extrémité (23) de la barre (13).

8. Véhicule automobile suivant l'une quelconque des revendications 3 à 7, **caractérisé en ce que** l'organe de blocage (15) est un câble tendu, dans la position escamotée de la barre (13 ; 43 ; 53 ; 63), entre la partie de deuxième extrémité (24 ; 43B ; 53B ; 63B) de la barre (13 ; 43 ; 53 ; 63) et le deuxième élément de structure (3, 23 ; 36).

9. Véhicule automobile suivant l'une quelconque des revendications 3 à 7, **caractérisé en ce que** l'organe de blocage (35) est une barre rigide.

10. Véhicule automobile suivant l'une quelconque des revendications 1 à 9, comportant un toit fixe (11), **caractérisé en ce que** l'organe de blocage (15; 35) s'étend dans ledit toit (11).

11. Véhicule automobile suivant l'une quelconque des revendications 1 à 10, **caractérisé en ce que** l'organe de blocage (15 ;35) à libération rapide comporte un élément pyrotechnique (30) relié à un organe de commande (31) qui commande son déclenchement.

12. Véhicule automobile suivant la revendication 11, **caractérisé en ce que** l'élément pyrotechnique (30) est adapté pour provoquer, lors de son déclenchement, la rupture de l'organe de blocage (35).

13. Véhicule automobile suivant la revendication 11, **caractérisé en ce que** l'organe de blocage (15) présente une attache (29) en engagement mutuel avec un moyen de rétention (27) du deuxième élément de structure (3, 23), formant la liaison entre l'organe de blocage (15) et le deuxième élément de structure (3, 23) , et l'élément pyrotechnique (30) est adapté pour provoquer, lors de son déclenchement, le dégagement de l'attache (29) par rapport au moyen de rétention (27).

## Claims

1. Automotive vehicle comprising a chassis (3) onto which structural elements are rigidly fixed, including bodywork (5) which has a pair of hollow lateral posts (9) which form a support for a windscreen (21) where the vehicle comprises in addition a safety device designed to preserve the bodywork (5) from the effects of being crushed if the vehicle accidentally turns over, where the said safety device includes two reinforcement bars (13 ; 43 ; 53 ; 63), with each of the said bars able to move from a folded position in which it folded, at least in part, into one respective lateral post (9), to a protection position in which it protrudes, at least in part, from the said post (9), **characterised by** the fact that the bar (13 ; 43 ; 53 ; 63) is rigidly fixed to a first structural element (3 ; 45 ; 63 , 65) where the said bar in its folded position is elastically deformed and maintained in position against the elastic return force thus created by at least one quick release locking device (15 ; 35) and when in its protection position is free of any elastic return stress.

2. Automotive vehicle as described in claim 1, **characterised by** the fact that the bar (13 ; 43 ; 53 ; 63) is fixed by a first end part (23 ; 43A ; 53A ; 63A) to the first structural element (3 ; 45 ; 63, 65), whilst the locking device (15 ; 35) connects a second end part (24 ; 43B ; 53B ; 63B) to a second structural element (3 ; 23 ; 36), when the bar (13 ; 43 ; 53 ; 63) is in its folded position.

3. Automotive vehicle according to claim 2 **characterised by** the fact that the second end part (24 ; 43B ; 53B ; 63B) of the bar (13 ; 43 ; 53 ; 63) is located, when the bar is in its folded position, in an upper part of the respective post (9).

4. Automotive vehicle according to claim 2 or 3, **characterised by** the fact that the bar (13) is effectively straight and is deformed under flexion in its folded position.

5. Automotive vehicle according to claim 2 or 3, **characterised by** the fact that the bar ( 43 ; 53 ; 63) has two effectively orthogonal branches (43A, 43B ; 53A, 53B ; 63A, 63B), a first of which (43A ; 53A ; 63A) extends along an effectively transverse axis of the vehicle, and that the second is, in the folded position of the bar, at least partly folded in the respective post (9), with the first end part belonging to the first branch (43A ; 53A ; 63A) and the second end part belonging to the second branch (43B ; 53B ; 63B), and where the second branch (43B ; 53B ; 63B) is deformed under torsion in the folded position of the bar.

6. Automotive vehicle according to claim 4 of 5, **characterised by** the fact that the locking device (15; 35) extends, in the folded position of the bar (13), effectively from the upper part of the post (9) to a lower part of the side of the vehicle.

7. Automotive vehicle according to claims 4 and 6 taken together, **characterised by** the fact that the first structural element (3) is located in a lower part of the side of the vehicle, and the second structural element (3, 23) is either one and the same with the first structural element (3), or formed by the first end part (23) of the bar (13).

8. Automotive vehicle according any of claims 3 to 7, **characterised by** the fact that the locking device (15) is a cable, stretched, in the folded position of the bar (13 ; 43 ; 53 ; 63), between the second end part (24 ; 43B ; 53B ; 63B) of the bar (13 ; 43 ; 53 ; 63) and the second structural element (3, 23 ; 36).

9. Automotive vehicle according to any of claims 3 to 7, **characterised by** the fact that the locking device (35) is a rigid bar.

10. Automotive vehicle according to any of claims 1 to 9, comprising a fixed roof (11), **characterised by** the fact that the locking device (15 ; 35) extends inside the said roof (11).

11. Automotive vehicle according any of claims 1 to 10, **characterised by** the fact that the quick release locking device (15 ; 35) includes a pyrotechnic element (30) connected to a control device (31) which controls its triggering.

12. Automotive vehicle according to claim 11, **characterised by** the fact that the pyrotechnic element (30) is designed so that when it is triggered it causes the locking device (35) to break.

13. Automotive vehicle according to claim 11, **characterised by** the fact that the locking device (15) has a tie (29) which mutually engages with a means of retention (27) of the second structural element (3, 23), forming a link between the locking device (15) and the second structural element (3, 23), and that the pyrotechnic device (30) is designed so that when it is triggered it releases the tie (29) in relation to the means of retention (27).

## Patentansprüche

1. Kraftfahrzeug, enthaltend ein Fahrgestell (3), auf dem Aufbauelemente starr befestigt sind, darunter eine Karosserie (5), die ein Paar hohle Seitenstreben (9) aufweist, die eine Halterung für eine Windschutzscheibe (21) bilden, wobei das Fahrzeug des Weiteren eine Sicherheitsvorrichtung aufweist, die dazu bestimmt ist, die Karosserie (5) vor einer Aufprallwirkung bei einem unfallbedingten Umstürzen des Fahrzeugs zu schützen, wobei die Sicherheitsvorrichtung zwei Verstärkungsholme (13; 43; 53; 63) aufweist, wobei jeder der Holme von einer versenkten Position, in der er wenigstens teilweise in einer entsprechenden Seitenstrebe (9) versenkt ist, in eine Schutzposition verschiebbar ist, in der er wenigstens teilweise aus der Strebe (9) hervorragt, **dadurch gekennzeichnet, dass** der Holm (13; 43; 53; 63) starr an einem ersten Aufbauelement (3; 45; 63, 65) befestigt ist, wobei der Holm in seiner versenkten Position elastisch verformt und gegen die so erzeugte elastische Rückstellkraft durch wenigstens ein Schnellauslöse-Blockierorgan in Position gehalten wird und in seiner Schutzposition frei vom Zurückhalten der elastischen Rückstellkraft ist.

2. Kraftfahrzeug nach Anspruch 1, **dadurch gekennzeichnet, dass** der Holm (13; 43; 53; 63) über einen ersten Endteil (23; 43A; 53A; 63A) an dem ersten Aufbauelement (3; 45; 63; 65) befestigt ist, während das Blockierorgan (15; 35) einen zweiten Endteil (24; 43B; 53B; 63B) mit einem zweiten Aufbauelement (3; 23; 36) verbindet, wenn sich der Holm (13; 43; 53; 63) in seiner versenkten Position befindet.

3. Kraftfahrzeug nach Anspruch 2, **dadurch gekennzeichnet, dass** der zweite Endteil (24; 43B; 53B; 63B) des Holms (13; 43; 53; 63) sich in der versenkten Position des Holms in einem oberen Teil der jeweiligen Strebe (9) befindet.

4. Kraftfahrzeug nach Anspruch 2 oder 3, **dadurch gekennzeichnet, dass** der Holm (13) im Wesentlichen geradlinig und in seiner versenkten Position in Biegung verformt ist.

5. Kraftfahrzeug nach Anspruch 2 oder 3, **dadurch gekennzeichnet, dass** der Holm (43; 53; 63) zwei Schenkel (43A; 43B; 53A; 53B; 63A; 63B) aufweist, die im Wesentlichen orthogonal sind, von welchen sich ein erster (43A; 53A; 63A) entlang einer im Wesentlichen quer zum Fahrzeug verlaufenden Achse erstreckt und der zweite in der versenkten Position des Holms wenigstens teilweise in der jeweiligen Strebe (9) versenkt ist, wobei der erste Endteil zu dem ersten Schenkel (43A; 53A; 63A) gehört und der zweite Endteil zu dem zweiten Schenkel (43B; 53B; 63B) gehört und der zweite Schenkel (43B; 53B; 63B) in der versenkten Position des Holms in Torsion verformt ist.

6. Kraftfahrzeug nach Anspruch 4 oder 5, **dadurch gekennzeichnet, dass** das Blockierorgan (15; 35) sich in der versenkten Position des Holms (13) im Wesentlichen von dem oberen Teil der Strebe (9) bis zu einem unteren Seitenteil des Fahrzeugs erstreckt.

7. Kraftfahrzeug nach den zusammen genommenen Ansprüchen 4 und 6, **dadurch gekennzeichnet, dass** das erste Aufbauelement (3) sich in einem unteren Seitenteil des Fahrzeugs befindet und das zweite Aufbauelement (3, 23) entweder mit dem ersten Aufbauelement (3) zusammen gebildet ist oder aus dem ersten Endteil (23) des Holms (13) gebildet ist.

8. Kraftfahrzeug nach einem beliebigen der Ansprüche 3 bis 7, **dadurch gekennzeichnet, dass** das Blockierorgan (15) ein Seil ist, das in der versenkten Position des Holms (13; 43; 53; 63) zwischen dem zweiten Endteil (24; 43B; 53B; 63B) des Holms (13; 43; 53; 63) und dem zweiten Aufbauelement (3; 23; 36) gespannt ist.

9. Kraftfahrzeug nach einem beliebigen der Ansprüche 3 bis 7, **dadurch gekennzeichnet, dass** das Blockierorgan (35) ein starrer Holm ist.

10. Kraftfahrzeug nach einem beliebigen der Ansprüche 1 bis 9, enthaltend ein festes Dach (11), **dadurch gekennzeichnet, dass** das Blockierorgan (15; 35) sich in das Dach (11) erstreckt.

11. Kraftfahrzeug nach einem beliebigen der Ansprüche 1 bis 10, **dadurch gekennzeichnet, dass** das Blockierorgan (15; 35) mit Schnellauslösung ein pyrotechnisches Element (30) aufweist, das mit einem Steuerorgan (31) verbunden ist, das seine Auslösung steuert.

12. Kraftfahrzeug nach Anspruch 11, **dadurch gekennzeichnet, dass** das pyrotechnische Element (30) so ausgelegt ist, dass es bei seiner Auslösung den Bruch des Blockierorgans (35) verursacht.

13. Kraftfahrzeug nach Anspruch 11, **dadurch gekennzeichnet, dass** das Blockierorgan (15) eine Befestigung (29) aufweist, die sich in wechselseitigem Eingriff mit einem Rückhaltemittel (27) des zweiten Aufbauelements (3, 23) befindet, wodurch die Verbindung zwischen dem Blockierorgan (15) und dem zweiten Aufbauelement (3, 23) gebildet wird, und das pyrotechnische Element (30) so ausgelegt ist, dass es bei seiner Auslösung das Lösen des Eingriffs der Befestigung (29) in Bezug auf das Rückhaltemittel (27) verursacht.
